# EUROPÄISCHE PATENTSCHRIFT

(11) **EP 0 471 041 B1**
(45) Veröffentlichungstag und Bekanntmachung des Hinweises auf die Patenterteilung: **02.03.1994**
(21) Anmeldenummer: 91901268.2
(22) Anmeldetag: 10.01.1991
(51) Int. Cl.: F16B 7/04, F16B 7/18, F16B 12/40, E04B 1/58

(54) **VERFAHREN ZUM LÖSBAREN BEFESTIGEN EINER ROHRFÖRMIGEN STREBE AN EINER SÄULE, VERBINDUNGSEINRICHTUNG ZUR DURCHFÜHRUNG DES VERFAHRENS UND VERBINDUNG**
PROCESS FOR DETACHABLY ATTACHING A TUBULAR STRUT TO A COLUMN, A CONNECTION DEVICE FOR CARRYING OUT THIS PROCESS, AND THE RESULTING CONNECTION
PROCEDE ET DISPOSITIF DE LIAISON DETACHABLE DE CONTRE-FICHES TUBULAIRES A UNE COLONNE, ET LA LIAISON AINSI FORMEE

(30) Priorität: 02.03.1990 CH 675/90
(43) Veröffentlichungstag der Anmeldung: 19.02.1992
(73) Patentinhaber: USM U. SCHAERER SOEHNE AG, CH-3110 Münsingen (CH)
(72) Erfinder: SCHÄRER, Paul, CH-3110 Münsingen (CH)
(74) Vertreter: Keller, René, Dr.
(86) Internationale Anmeldenummer: CH9100009
(87) Internationale Veröffentlichungsnummer: WO9113262

(56) Entgegenhaltungen:
- CH-A- 215 903
- CH-A- 429 317
- DE-U- 8 813 241
- US-A- 3 945 743

## Beschreibung

Die Erfindung betrifft eine Verbindungseinrichtung zum lösbaren Befestigen eines runden Strebenrohres am Mantel einer runden Säule gemäß dem Oberbegriff des Patentanspruchs 1 und eine lösbare Verbindung eines Strebenrohres mit einem Säulenrohr gemäß dem Oberbegriff des Patentanspruchs 4.

Eine nicht gattungsgemäße Verbindungseinrichtung zum Verbinden einer rechteckigen Säule mit einer rechteckigen rohrförmigen Strebe ist aus der US-A 4,365,907 und der US-A 3 945 743 bekannt. Da hier jedoch ebene Flächen vorhanden sind, können die bekannten Konstruktionen nicht auf eine Verbindung zwischen einer runden Säule und dem Ende einer runden Strebe übertragen werden.

Eine weitere nicht gattungsgemäße Verbindungseinrichtung wird in der DE-U 88 13 241 und der CH 429 317 beschrieben. Die bekannte Verbindungseinrichtung verband die Enden von runden Streben mit einer Gewindebohrungen aufweisenden Knotenkugel untereinander. In die Strebenenden wurde ein Keilelementpaar mit einer axialen Durchgangsbohrung eingesetzt. Durch die Durchgangsbohrung wurde eine in das betreffende Gewinde der Knotenkugel eingreifende Schraube gesteckt und die Schraube angezogen, wodurch die Keilelemente gegen die Innenwandung des Strebenendes gepreßt wurden. Bei der nicht gattungsgemäßen Verbindung konnten nur Rohrenden stirnseitig miteinander verbunden werden. Eine Verbindung der Strebenenden am Mantel einer Säule ist mit dieser Verbindungsanordnung nicht möglich.

Eine weitere nicht gattungsgemäße, nicht lösbare Verbindungseinrichtung eines runden Strebenrohres am Mantel einer runden mehrere Durchbrüche im Verbindungsbereich aufweisenden Säule ist in der CH-A 215 903 beschrieben. Die Verbindungseinrichtung hat ein Einsatzelement mit einer Durchgangsbohrung sowie einen in die hohle Säule einsetzbaren durchbrochenen Säulenkern. Durch den Durchbruch in der Säule, im Säulenkern und die Durchgangsbohrung im Einsatzelement ist eine Schraube als kraftausübendes Organ durchgeführt, welche das Einsatzelement gegen den Säulenmantel preßt. Das Einsatzelement hat ein Paßstück, auf welches das Strebenende geschoben und mit einer durch ein Loch in der Strebenwand in das Paßstück greifenden Niete gegen Abziehen gesichert ist.

Aufgabe der Erfindung ist es, eine Verbindungseinrichtung für die Befestigung eines runden Strebenrohrs am Mantel einer Säule zu schaffen, welche große Biege- und Scherkräfte überträgt und somit eine gute Halterung der Strebe gewährleistet, ein ästhetisches Aussehen hat sowie auf einfache Art wieder lösbar ist.

Die Lösung der Aufgabe hinsichtlich der Verbindungseinrichtung sowie der Verbindung ist Gegenstand des Patentanspruchs 1 bzw. 4.

Bevorzugte Ausführungsformen sind Gegenstand der Ansprüche 2, 3, 5 und 6.

Im folgenden werden Beispiele der erfindungsgemäßen Verbindungseinrichtung und der erfindungsgemäßen Verbindung anhand von Zeichnungen näher erläutert. Es zeigen:
- Fig. 1: eine perspektivische Schnittdarstellung durch eine Verbindung von vier Streben mit einer Säule mittels einer Verbindungseinrichtung, bestehend aus einem in die Säule eingelegten Kern und vier Keilelementpaaren, deren Keilelemente axial mit einer Schraube gegeneinander verschiebbar sind,
- Fig. 2: eine perspektivische Darstellung eines Keilelements des in **Figur 1** verwendeten Keilelementpaares,
- Fig. 3: eine perspektivische Darstellung des anderen Keilelements des in **Figur 1** verwendeten Keilelementpaares.
- Fig. 4: eine Draufsicht auf das in **Figur 3** dargestellte Keilelement, und
- Fig. 5: eine perspektivische Darstellung einer Verbindungsvariante einer Strebe mit der Säule.

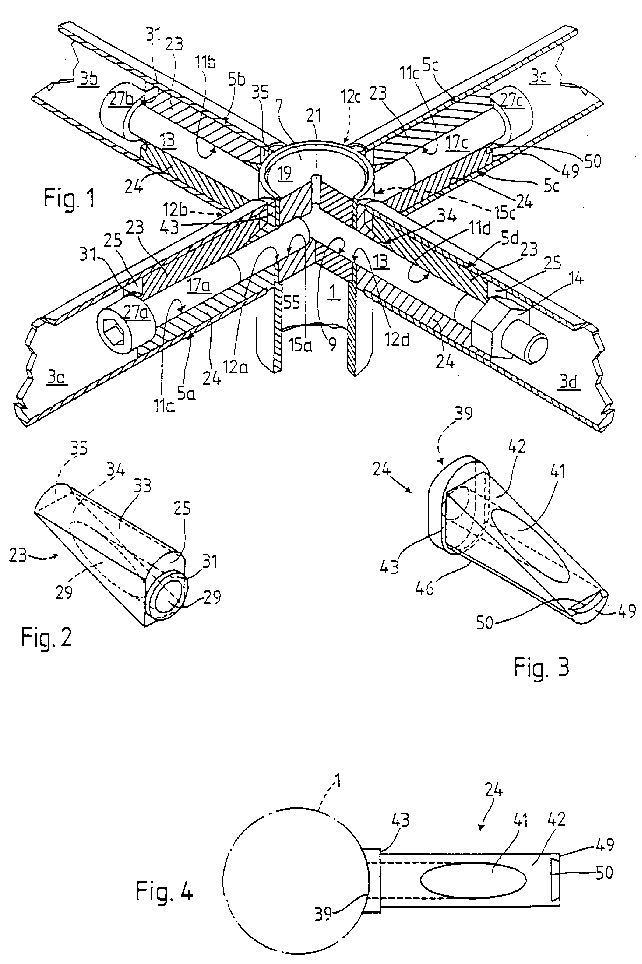

Bei der in **Figur 1** dargestellten Verbindung einer Säule 1 mit vier rohrförmigen Streben 3a bis 3d mit ovalem Querschnitt hat das Verbindungselement vier Keilelementpaare 5a bis 5d als Keilelementsätze, einen Kern 7 innerhalb der Säule 1 als kraftausübendes Organ und eine lange Zylinderschraube 13 mit Innensechskant und einer Mutter 14. Die Zylinderschraube 13 greift durch eine Durchgangsbohrung 9 im Kern 7, durch je eine Durchgangsbohrung 11b und 11d in den gegenüberliegenden Keilelementpaaren 5b und 5d in den Streben 3b und 3d und durch zwei gegenüberliegende Locher 12b und 12d im Säulenmantel. Je zwei kurze Zylinderschrauben 17a und 17c, ebenfalls mit Innensechskant, greifen durch je eine Durchgangsbohrung 11a und 11c der Keilelementpaare 5a und 5c und ein Loch 12a bzw. 12c im Säulenmantel und sind in je eine Gewindebohrung 15a (sichtbar in **Figur 1**) und 15c (nicht sichtbar in **Figur 1**) eingeschraubt. Der Kern 7 hat einen dem Innenraum der Säule 1 bis auf eine Spieltoleranz angepaßten Querschnitt. Von seiner Oberseite 19 geht als Kupplung für ein Halteelement eine zentrische Gewindebohrung 21 aus, in die als Halteelement eine nicht dargestellte Schraube einschraubbar ist. um den Kern 7 während der Verbindungsmontage am Ort der Verbindung in der Säule 1 zu halten. Die Achsen der beiden Gewindebohrungen 15a und 15c liegen senkrecht und in gleicher Höhe zur Durchgangsbohrung 9 im Kern 7. Die Löcher 12a bis 12d in der Säule 1 sind passend zur Durchgangsbohrung 9 sowie zu den Gewindebohrungen 15a und 15c ausgeführt. Der ovale Innenquerschnitt der Streben 3a bis 3d und der Durchmesser der Mutter 14. gemessen zwischen zwei parallelen Seitenflächen sowie zwischen zwei radial gegenüberliegenden Seitenecken, ist so bemessen, daß die jeweilige Strebe 3a, 3b, 3c bzw. 3d zwar über die auf der Schraube 13 sitzende Mutter 14 schiebbar, aber die Mutter 14 im Innenraum der jeweiligen Strebe 3a, 3b, 3c bzw. 3d (hier 3d) nicht drehbar ist.

Jedes der vier Keilelementpaare 5a bis 5d besteht aus je zwei Keilelementen 23 und 24, wobei der Schraubenkopf 27a bzw. 27c der Schraube 17a bzw. 17c, der Schraubenkopf 27b der Schraube 13 bzw. die Mutter 14 der Stirnfläche 25 des Keilelements 23 benachbart ist. Das in **Figur 2** dargestellte Keilelement 23 hat eine zur Stirnfläche 25 senkrecht verlaufende Durchgangsbohrung 29, welche Teil der Durchgangsbohrungen 11a, 11b, 11c bzw. 11d des Keilelementpaare 5a, 5b, 5c bzw. 5d ist und einen um eine Toleranz größeren Durchmesser hat als der Schaftdurchmesser der Schrauben 13, 17a und 17c. Um den Ausgang der Durchgangsbohrung 29 auf der Stirnseite 25 ist ein ebenflächig bearbeiteter ringförmiger Ansatz 31 angeordnet. der eine einwandfreie Auflage der jeweiligen Schraubenköpfe 27a, 27b, 27c bzw. der Mutter 14 ermöglicht. Der Ansatz 31 wird ausgebildet, um nicht die ganze Stirnseite 25 bearbeiten zu müssen. Rechtwinklig zur Stirnfläche 25 verläuft eine gewölbte Seitenfläche 33, deren Wölbung der Innenwölbung der Strebe 3 im beabsichtigen Auflagebereich angepaßt ist. An der der Seitenfläche 33 gegenüberliegenden Seite verläuft die Keilfläche 34 unter einem spitzen Winkel zur Stirnfläche 25 sowie zur Mittellinie der gewölbten Seitenfläche 33. Die Schnittkante zwischen der Stirnfläche 25 und der Keilfläche 34 ist eine Gerade. Das Keilelement 23 ist an seiner Spitze mit einer Vorderfläche 35 parallel zur Stirnfläche 25 abgestumpft.

Das in Figur 3 in perspektivischer Darstellung und in Figur 4 in einer Draufsicht dargestellte Keilelement 24 hat im Gegensatz zum Keilelement 23 eine gewölbte Stirnfläche 39, deren Wölbung, wie in Figur 4 dargestellt der Wölbung des Mantels der Säule 1 angepaßt ist. Eine Durchgangsbohrung 41 verlauft ausgehend von der Mitte der Stirnfläche 39 und besitzt die Mittelsenkrechte der Stirnfläche 39 als Achse. Die Durchgangsbohrung 41. ist Teil der Durchgangsbohrung 11a, 11b, 11c bzw. 11d des Keilelementpaares 5a, 5b, 5c bzw. 5d und hat einen Durchimesser der größer ist als der Durchmesser der Durchgangsbohrung 29 des Keilelements 23. Der die Stirnfläche 39 tragende vordere Teil des Keilelements 24 ist gegenüber dem restlichen. die Keilfläche 42 tragenden Teil derart verbreitet, daß sich ein Ansatz 43 bildet, auf dem die Stirnseite des der Säule 1 zugewandten Endes der jeweiligen Strebe 3a, 3b, 3c bzw. 3d aufliegt. Die Verbreiterung ist, wie in Figur 1 sichtbar, aus ästhetischen Gründen um eine Toleranz kleiner als der Querschnitt der Strebe 3a, 3b, 3c bzw. 3d. Rechtwinklig schließt an die Auflagefläche für die Strebe 5a, 5b, 5c bzw. 5d des Ansatzes 43 eine gewölbte Seitenfläche 46 an, deren Wölbung der Innenwölbung der Strebe 3a, 3b, 3c bzw. 3d im beabsichtigen Auflagebereich angepaßt ist. An der der Seitenfläche 46 gegenüberliegenden Seite verläuft die Keilfläche 42 unter einem spitzen Keilwinkel zur Mittellinie der gewölbten Auflagefläche. Das Keilelement 24 ist an seiner Spitze mit einer Vorderfläche 49 abgestumpft, in der auf der Seite der einmündenden Keilfläche 42 eine Vertiefung 50 liegt. Die Vertiefung 50 verhindert bei zusammenmontierter Verbindungseinrichtung ein Anstehen der Mutter 14 an der Vorderfläche 49.

Zur Herstellung der in Figur 1 dargestellten Verbindung der vier Streben 3a, 3b, 3c und 3d mit der Säule 1 wird das Keilelementpaar 5b derart auf die Zylinderschraube 13 gesteckt, daß der Ansatz 31 des Keilelements 23 am Schraubenkopf 27b der Schraube 13 anliegt. Anschließend wird eine nicht dargestellte Schraube, auf deren Schaft eine nicht dargestellt Mutter aufgeschraubt ist, in die Gewindebohrung 21 des Kerns 7 teilweise eingeschraubt und mit der Mutter festgezogen, der Kern 7 mit der Schraube gehalten und in den Innenraum der Säule 1 derart gesteckt, daß die Durchgangsbohrung 9 des Kerns 7 mit den Löchern 12b und 12d im Säulenmantel fluchtet. Die Schraube 13 wird durch das Loch 12b, die Durchgangsbohrung 9 und das Loch 12d gesteckt. das Keilelementpaar 5d zuerst mit dem Keilelement 23 auf die Schraube 13 geschoben und die Mutter 14 aufgeschraubt. Das Keilelement 23 kann, wie in Figur 1 dargestellt oben liegen, kann aber auch unten liegen, ohne daß die Funktionsfähigkeit gestört ist. Anschließend werden die beiden Streben 3b und 3d über die Keilelementpaare 5b und 5d geschoben und die Schraube 13 mit einem nicht dargestellten langen Inbusschlüssel durch die Strebe 3b hindurch leicht angezogen. Die Mutter 14 kann sich in der Strebe 3d nach oben Gesagtem nicht drehen.

Die Schrauben 17a und 17c werden durch die jeweiligen Keilelementpaare 5a bzw, 5c derart gesteckt, daß der Ansatz 31 des Keilelements 23 am Schraubenkopf 27a bzw. 27c anliegt. Anschließend die Schrauben 17a und 17c durch die Locher 12a und 12c in der Säule 1 gesteckt und in die Gewindebohrungen 15a und 15c im Kern 7 eingeschraubt. Die Streben 3a und 3c werden über die Keilelementpaare 5a und 5c geschoben bis sie mit der Stirnseite ihrer Enden an der Auflagefläche des jeweiligen Ansatzes 43 anschlagen. Mittels des oben erwähnten. langen Inbusschlüssels werden die Schrauben 17a und 17c durch die Streben 3a und 3c hindurch fest angezogen und die Schraube 13 nachgespannt. Die Schraube aus der Gewindebohrung 21 im Kern 7 wird wieder herausgeschraubt. Durch das feste Anziehen rutschen die Keilelemente 23 und 24 auf ihren Keilflächen 34 und 42 achsial aufeinander zu, wodurch sie auseinander mit ihren gewölbten Seitenflächen 33 und 46 gegen die Innenwandung der Streben 3a bis 3d gepreßt werden. Gleichzeitig werden die Streben 3a bis 3d gegen die Auflageflächen der Ansätze 43 der Keilelemente 24 gezogen und dadurch deren Stirnflächen 39 bündig gegen den Mantel der Säule 1 gedrückt, wodurch eine ausgezeichnete Verbindung zwischen den Streben 3a bis 3d und der Säule 1 hergestellt wird. Der in die Säule 1 eingelegte Kern 7 und die am Außenmantel der Säule 1 bündig anliegende Stirnflache 39 des Keilelements 24 erlaubt aufgrund der großen kraftübertragenden Flächen und der Versteifung und Kraftverteilung auf eine große Säulenfläche durch den Kern 7 eine große Übertragung von Biege- und Scherkräfte von den Streben 3a, 3b, 3c und 3d auf die Säule 1. Die hier beschriebene Verbindung gestattet es ferner im Gegensatz zur aus der US-PS 4,365.907 bekannten Verbindung zwei gegenüberliegende bzw. zweimal zwei gegenüberliegende Streben an der Säule 1 zu befestigen. Im Gegensatz zur bekannten Verbindung, bei der im Verlauf der Verbindungsmontage die Schraube für den zentrischen Keil in die Säule hineinfallen kann, ist ein Hineinfallen von Verbindungselementen bei der erfindungsgemäßen Verbindung in die Säule 1 ausgeschlossen.

Zum Lösen der Verbindung wird in zeitlich umgekehrter Arbeitsweise. wie oben beschrieben, vorgegangen. Aufgrund des spitzes Keilwinkel der Keilflächen 34 und 42 zur Mittellinie der gewölbten Flächen 33 und 46 sind die Keilelemente 23 und 24 oftmals auch nach Lösen der Schrauben 13, 17a bzw. 17c in den Streben 3a, 3b, 3c bzw. 3d verklemmt. Es wird nun ein nicht dargestellter zylindrischer Dorn, dessen Durchmesser um eine Spielpassung kleiner ist als der Durchmesser der Durchgangsbohrung 41, aber größer als der Durchmesser der Durchgangsbohrung 29. in die Durchgangsbohrung 41 des Keilelements 24 von der gewölbten Stirnseite 39 aus eingeführt bis dieser am Rand der Durchgangsbohrung 29 ansteht. Mit einem kräftigen Hammerschlag auf das Ende des Dorns lassen sich beide Keilelemente 23 und 24 in der betreffenden Strebe 3a, 3b, 3c bzw. 3d voneinander lösen.

Anstelle der Vertiefung 50 in der Vorderfläche 49 des Keilelements 24. kann dieses auch um die Tiefe der Vertiefung 49 verkürzt werden.

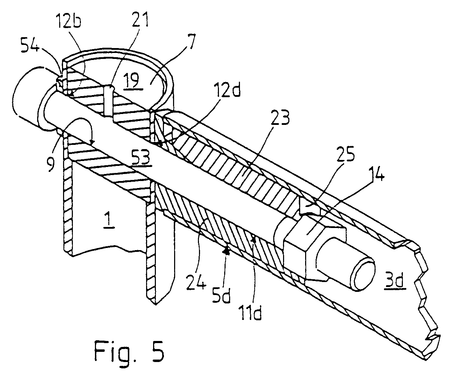

Anstelle vier Streben 3a , 3b, 3c und 3d mit der Säule 1 zu verbinden, können nur drei, zwei oder nur eine Strebe angebracht werden. Eine Verbindung mit nur einer Strebe 3d ist in Figur 5 dargestellt. Es wird hier eine Zylinderschraube 53. welche etwa die halbe Schaftlänge der Zylinderschraube 13 besitzt verwendet. Der Kern 7 wird in die Säule 1 eingebracht und die Durchgangsbohrung 9 auf die Löcher 12b und 12d in der Säule 1 ausgerichtet. Auf die Schraube 53 wird eine Unterlegscheibe 54 geschoben und die Schraube 53 durch das Loch 12b im Säulenmantel, durch die Durchgangsbohrung 9 des Kerns 7, durch das Loch 12d im Säulenmantel und durch die Durchgangsbohrung 11d des Keilelementpaares 5d analog zur obigen Beschreibung gesteckt sowie auf das Ende der Schraube 53 die Mutter 14 aufgeschraubt. Anschließend wird die Strebe 3d über das Keilelementpaar 5d geschoben und die Schraube 53 mit einem Inbusschlüssel angezogen.

Anstelle die Gewlndebohrungen 15a und 15c senkrecht zur Durchgangsbohrung 9 anzuordnen. können diese auch unter einem anderen Winkel angeordnet werden: analoges gilt für die hierzu passenden Löcher 12a bis 12d im Säulenmantel. Je nach Dicke der Säule 1 und Abmessungen der Streben 3a, 3b, 3c bzw. 3d können auch mehr als drei Bohrungen 9, 15a, 15c angebracht werden.

Anstelle eines in die Säule 1 einsetzbaren Kerns 7 kann auch eine massive Säule verwendet werden, deren Bearbeitung allerdings aufwendig ist.

Anstelle Schrauben 13. 17a und 17c als kraftausübendes Organ zu verwenden. um die Keilelemente 23 und 24 achsial gegeneinander zu verschieben und sie aufgrund der kraftverstärkenden Wirkung durch die schiefe Ebene der Keilflächen 34 und 42 mit hoher Kraft gegen die Innenwand der Streben 3a, 3b, 3c bzw. 3d zu drücken, kann auch je ein nicht dargestellter, federbelasteter Bolzen der in einen nicht dargestellten Bajonnettverschuß in der Säule einrastet, verwendet werden, wobei die Kraft der Feder das Keilelement 23 gegen das Keilelement 24 drückt. Diese Verbindung läßt sich zwar schnell herstellen. ergibt aber nicht die hohe Kraftübertragung von der Strebe auf die Säule, wie bei der oben beschriebenen Anordnung.

Anstelle des Gewindelochs 21 im Kern 7 zum Einschrauben der nicht dargestellten Schrauben, kann auch als Kupplung für ein Halteelement ein Haken oder Haltestift fest auf der Oberseite 19 des Kerns 7 angebracht sein. Auch kann anstelle des Gewindelochs 21 ein Durchgangsloch vorhanden sein, in welches ein Haken zum Halten des Kerns 7 während der Montage eingesteckt wird.

Anstelle den Kern 7 bei der Verbindungsmontage z. B. an der in die Gewindebohrung 21 eingeschraubten Schraube zu halten. kann auch in den Innenraum der Säule 1, wie in Figur 1 dargestellt, ein Absatz 55 eingedreht werden, auf dem der Kern 7 ruht. Dieser Absatz 55 verunmöglicht ein Hineinrutschen des Kerns 7, bedeutet aber gegenüber der in die Gewindebohrung eingeschraubten Schraube einen höheren Fertigungsaufwand. Aus der Säule 1 kann bei gelöster Verbindung durch Einschrauben einer Schraube in die Gewindebohrung 21 oder mittels eines in die Gewindebohrung 21 eingreifenden Hakens der Kern 7 aus der Säule 1 wieder entfernt werden.

## Patentansprüche

1. Verbindungseinrichtung zur lösbaren Befestigung eines runden Strebenrohres **(3a, 3b, 3c, 3d)** am Mantel einer runden mit wenigstens einem Durchbruch im Verbindungsbereich durchbrochenen Säule **(1)**
mit einem eine Durchgangsbohrung aufweisenden, in das zu verbindende Strebenende einsetzbarem Einsatzelement,
einem durch die Durchgangsbohrung und den Durchbruch hindurchführbaren Organ **(13, 17a, 17b; 53)** mit einem auf den Rand des dem Säulenmantel abgewandten Durchgangsbohrungsendes auflegbaren, verbreiterten Organende zur Ausübung einer Anpreßkraft auf das Einsatzelement **(5a, 5b, 5c, 5d)** gegen den Säulenmantel, wobei
das Einsatzelement als axial durchbohrter Keilelementsatz mit einem axial durch das Organ **(13, 17a, 17b; 53)** gegeneinander verschiebbares Keilelementpaar **(5a, 5b,** **5c, 5d)** ausgebildet ist und
die Durchgangsbohrung des einen Keilelements **(24)** einen größeren Querschnitt hat als die **(29)** des anderen **(23)**, damit
bei einem in der Strebe **(3a, 3b, 3c, 3d)** verklemmten Keilelementpaar **(5a, 5b, 5c, 5d)** nach dem Lösen der Verbindung von Säule **(1)** und Strebe **(3a, 3b, 3c, 3d)** durch einen in die Durchgangsbohrung **(41)** des einen Keilelements **(24)** einsteckbaren Dorn, dessen Querschnitt um eine Spielpassung kleiner als der Querschnitt des einen Keilelements **(24)**, aber größer als der Querschnitt der Durchgangsbohrung **(29)** des anderen Keilelements **(23)** ist, das andere Keilelement **(23)** vom einen **(24)** lösbar ist.

2. Verbindungseinrichtung nach Anspruch 1, **dadurch gekennzeichnet,** daß
das eine **(24)** der Keilelemente **(23, 24)** an seinem breiteren Ende einen Ansatz **(43)** hat, der an seiner dem verjüngten Keilende zugewandten Seite eine Auflagefläche für die Stirnseite des der Säule **(1)** zugewandten Endes der Strebe **(3a, 3b, 3c, 3d)** hat, und
an seiner anderen, freien Seite **(39)** derart geformt ist, daß er **(43)** bündig an den Außenmantel der Säule **(1)** anlegbar ist.

3. Verbindungseinrichtung nach Anspruch 1 oder 2 mit einem in eine wenigstens teilweise hohle Säule **(1)** einsetzbaren Kern **(7)**, **dadurch gekennzeichnet,** daß
der Kern **(7)** mit einer Kupplung, zweckmäßig einem Gewindeloch **(21)** zum Anbringen eines Halteelements, z. B. einer Schraube versehen ist, um ihn **(7)** in der Säule **(1)** zu halten, damit er **(7)** beim Herstellen der Verbindung nicht in die Säule **(1)** hineinrutscht bzw. - fällt.

4. Lösbare Verbindung eines runden Strebenrohres **(3a, 3b,** **3c, 3d)** mit einem runden Säulenrohr **(1)** mittels einer Verbindungseinrichtung nach einem der Ansprüche 1 bis 3, wobei das Strebenende mit dem axial durchbohrten Einsatzelement **(5a, 5b, 5c, 5d)** gehalten, dieses mittels eines in ihm verlaufenden Organs **(13, 17a, 17b;** **53)**, zweckmäßigerweise einer Schraube mit Schraubenkopf, gegen den Säulenmantel gedrückt und das Organ **(13, 17a, 17b; 53)** durch wenigstens einen diametralen Säulenwanddurchbruch **(12a, 12b, 12c, 12d)** gesteckt ist sowie an deren einem Durchbrucheingang **(12b)** oder am der Säule **(1)** abgewandten Ende der Durchgangsbohrung **(11a, 11b, 11c)** des Einsatzelements **(5a, 5b, 5c)** das verbreiterte Organende **(27a, 27b, 27c)** aufliegt, wobei
das Einsatzelement als Keilelementsatz **(5a, 5b, 5c,** **5d)** mit einem Keilelementpaar ausgebildet und die Durchgangsbohrung **(11a, 11b, 11c, 11d)** axial in den beiden Keilelementen angeordnet ist und
die Durchgangsbohrung des einen Keilelements **(24)** einen größeren Querschnitt hat als die **(29**) des anderen **(23)**, damit
bei einem in der Strebe **(3a, 3b, 3c, 3d)** verklemmten Keilelementpaar **(5a, 5b, 5c, 5d)** nach dem Lösen der Verbindung von Säule **(1)** und Strebe **(3a, 3b, 3c, 3d)** durch einen in die Durchgangsbohrung **(41)** des einen Keilelements **(24)** einsteckbaren Dorn, dessen Querschnitt um eine Spielpassung kleiner als der Querschnitt des einen Keilelements **(24)**, aber größer als der Querschnitt der Durchgangsbohrung **(29)** des anderen Keilelements **(23)** ist, das andere Keilelement **(23)** vom einen **(24)** lösbar ist.

5. Verbindung nach Anspruch 4 mit einer wenigstens von einem ihrer Enden ausgehenden bis zum Ort der Befestigung der Strebe hohlen Säule und einem in den Innenraum der Säule **(1)** am Ort der Befestigung der Strebe **(3a, 3b, 3c, 3d)** eingesetzten Kern **(7)**, wobei
das Organ **(17a; 17c; 13; 53)** durch die Durchgangsbohrung **(11a, 11c; 11b)** des Einsatzelements **(5a; 5c; 5b)** und den Säulenmantel hindurchgesteckt und im Kern **(7)** befestigt ist oder
durch den Kern **(7)** hindurchgesteckt und an der Außenseite der Säule **(1)** oder dem der Säule **(1)** abgewandten Ende eines zweiten, in einer zweiten Strebe **(3d)** angeordneten Einsatzelements **(5d)** gehaltert ist.

6. Verbindung nach Anspruch 4 oder 5 mit einem eine Schraube mit Mutter aufweisendem Organ, deren Schraubenschaft die Säule diametral durchdringt, **dadurch gekennzeichnet,** daß
der Querschnitt der Strebe sowie die Mutter so ausgebildet und so bemessen sind, daß
die Mutter **(14)** in der Strebe **(3d)** längsverschiebbar, aber nicht drehbar ist.

## Claims

1. Connection device for detachably securing a circular tubular strut (3a, 3b, 3c, 3d) to the casing of a circular column (1) perforated by at least one aperture in the vicinity of the connection, comprising an insertion element which has a penetrating bore and can be inserted in the strut end which is to be connected; a member (13, 17a, 17b; 53), which can be guided through the penetrating bore and the aperture and has a widened member end which can be laid on the edge of the penetrating bore end which is turned away from the column casing to exert a pressing force on the insertion element (5a, 5b, 5c, 5d) against the column casing, the insertion element being formed as a wedge-shaped element set with an axial penetrating bore and a pair of wedge-shaped elements (5a, 5b, 5c, 5d) which can be displaced axially towards one another by means of the member (13, 17a, 17b; 53); and the penetrating bore of the one wedge-shaped element (24) has a larger cross-section than that (29) of the other wedge-shaped element (23) such that, when a pair of wedge-shaped elements (5a, 5b, 5c, 5d) is clamped in the strut (3a, 3b, 3c, 3d), the other wedge-shaped element (23) can be detached from the first (24), after the detachment of the connection of the column (1) and the strut (3a, 3b, 3c, 3d) by means of a pin which can be inserted into the penetrating bore (41) of the one wedge element (24) and which has a cross-section which is smaller than the cross-section of the one wedge element (24) by a clearance fit but is larger than the cross-section of the penetrating bore (29) of the other wedge-shaped element (23).

2. Connection device according to Claim 1, characterised in that one (24) of the wedge-shaped elements (23, 24) has, at its wider end, an extension (43) which has, on the side thereof which is turned towards the tapering wedge end, a supporting surface for the end face of the end of the strut (3a, 3b, 3c, 3d) which is turned towards the column (1), and, on its other, free side (39) is formed in such a manner that it (43) can be laid flush against the external casing of the column (1).

3. Connection device according to Claim 1 or Claim 2, with a core piece (7) which can be inserted in an at least partially hollow column (1), characterised in that the core piece (7) is provided with a coupling, advantageously a threaded bore (21), for mounting a retaining element, for example a screw, in order to retain it (7) in the column (1), such that it (7) does not slide or fall into the column (1) when the connection is produced.

4. Detachable connection of a circular tubular strut (3a, 3b, 3c, 3d) to a circular column tube (1) by means of a connection device according to any one of Claims 1 to 3, wherein the strut end is retained by means of the insertion element (5a, 5b, 5c, 5d) with an axially penetrating bore, this element is urged against the column casing by means of a member (13, 17a, 17b; 53), advantageously a screw with a screw head extending therein, and is urged against the column casing and the member (13, 17a, 17b; 53) is inserted through at least one diametric aperture (12a, 12b, 12c, 12d) in the column wall and the widened end (27a, 27b, 27c) of the member abuts one of the inlet apertures (12b) or the end of the penetrating bore (11a, 11b, 11c), which is turned away from the column (1), of the insertion element (5a, 5b, 5c), the insertion element being formed as a wedge-shaped element set (5a, 5b, 5c, 5d) with a pair of wedge-shaped elements, and the penetrating bore (11a, 11b, 11c, 11d) is disposed axially in the two wedge-shaped elements, and the penetrating bore of the one wedge-shaped element (24) has a larger cross-section than that (29) of the other (23) such that, when a pair of wedge-shaped elements (5a, 5b, 5c, 5d) is clamped in the strut (3a, 3b, 3c, 3d), the other wedge-shaped element (23) can be detached from the first (24) after the detachment of the connection of the column (1) and the strut (3a, 3b, 3c, 3d) by means of pin which can be inserted into the penetrating bore (41) of the one wedge-shaped element (24), the cross-section of which pin is smaller than the cross-section of the one wedge-shaped element (24) by a clearance fit, but is larger than the cross-section of the penetrating bore (29) of the other wedge-shaped element (23).

5. Connection according to Claim 4 with a column which is hollow at least from one of its ends to the point at which the strut is secured, and a core piece (7) inserted into the interior of the column (1) at the point where the strut (3a, 3b, 3c, 3d) is secured, the member (17a; 17c; 13; 53) being passed through the penetrating bores (11a, 11c; 11b) of the insertion element (5a; 5c; 5b) and secured in the core piece (7) or being passed through the core piece (7) and retained on the exterior of the column (1) or on the end which faces away from the column (1) of an insertion element (5d) disposed in a second strut (3d).

6. Connection according to Claim 4 or Claim 5 with a member comprising a screw with a nut, the screw shaft of which penetrates the column diametrically, characterised in that the cross-section of the strut and the nut are of a shape and size such that the nut (14) can be displaced longitudinally but not rotated in the strut (3d).

## Revendications

1. Dispositif de liaison, pour assurer la jonction démontable d'un tube de tirant cylindrique (3a, 3b, 3c, 3d) sur l'enveloppe d'une colonne cylindrique (1), présentant au moins un passage dans la zone de liaison,
pour un élément de garniture, muni d'un trou traversant, pouvant être mis en oeuvre dans l'extrémité du tirant à relier,
avec un organe (13, 17a, 17b, 53), susceptible d'être enfilé à travers ce trou traversant et le passage, l'extrémité de cet organe, élargie, étant susceptible d'être placée sur le bord de l'extrémité du trou opposée à l'enveloppe de la colonne, en vue d'exercer une force de pressage sur l'élément de garniture (5a, 5b, 5c, 5d) contre l'enveloppe de cette colonne,
l'élément de garniture étant réalisé sous forme d'un ensemble d'éléments en coins, percés axialement, avec une paire d'éléments (5a, 5b, 5c, 5d) déplaçables l'un par rapport à l'autre au moyen de l'organe (13, 17a, 17b, 53), et
le trou traversant d'un élément en coin (24) ayant une section transversale supérieure à celle (29) de l'autre élément en coin (23),
afin que, dans le cas d'une paire d'éléments (5a, 5b, 5c, 5d) bloqués par serrage dans le tirant (3a, 3b, 3c, 3d), une fois desserrée la liaison entre la colonne (1) celui-ci (3a, 3b, 3c, 3d) au moyen d'un mandrin susceptible d'être enfiché dans le trou traversant (41) de l'un (24) des éléments en coin, sa section transversale soit inférieure au jeu près, à la section transversale d'un élément en coin (24), mais supérieure à la section transversale du trou traversant (29) de l'autre élément (23), désolidarisable du premier (24).

2. Dispositif de liaison selon la revendication 1, caractérisé en ce que
l'un (24) des éléments en coins (23, 24) présente à son extrémité large un appendice (43), ayant, du côté tourné vers son extrémité effilée, une partie d'appui pour la face frontale de l'extrémité du tirant (3a, 3b, 3c, 3d), tournée vers la colonne (1), et étant libre
sur son autre face (39), de manière à ce que cet appendice (43) puisse être appliqué au contact de l'enveloppe extérieure de la colonne (1).

3. Dispositif de liaison selon la revendication 1 ou 2, avec un noyau (7) susceptible d'être inséré dans une colonne (1) au moins partiellement creuse, caractérisé en ce que ce noyau (7) est pourvu d'un raccord, de manière appropriée un trou taraudé (21), pour loger un élément de fixation, par exemple une vis, afin de le maintenir dans la colonne (1) de sorte qu'il ne glisse dans celle-ci, ni ne s'échappe lors de l'établissement de la liaison.

4. Liaison démontable d'un tube de tirant (3a, 3b, 3c, 3d) cylindrique avec un tube de colonne (1), au moyen d'un dispositif de liaison selon l'une des revendications 1 à 3, l'extrémité du tirant étant maintenue à l'aide de l'élément de garniture (5a, 5b, 5c, 5d) percé axialement, celui-ci étant appuyé au moyen d'un organe (13, 17a, 17b, 53) tel qu'une vis à tête, contre l'enveloppe de la colonne, l'organe (13, 17a, 17b, 53) étant engagé à travers au moins un passage dans la paroi de la colonne (12a, 12b, 12c, 12d), orienté diamétralement, l'extrémité de cet organe (27a, 27b, 27c) reposant sur son extrémité opposée sur l'entrée du trou traversant (12b) de la colonne (1) ou du trou traversant (11a, 11b, 11c) de l'élément de garniture (5a, 5b, 5c).
l'élément de garniture étant réalisé sous forme d'un jeu d'éléments en coins (5a, 5b, 5c, 5d), une paire d'éléments et le trou traversant (11a, 11b, 11c, 11d) étant disposés axialement
le trou traversant d'un élément (24) ayant une section transversale supérieure à celle de l'autre élément (23),
afin que, dans le cas d'une paire d'éléments (5a, 5b, 5c, 5d) bloqués par serrage dans le tirant (3a, 3b, 3c, 3d), une fois la liaison desserrée entre la colonne (1) et le tirant (3a, 3b, 3c, 3d), au moyen d'un mandrin susceptible d'être enfiché dans le trou traversant (41) de l'un (24) des éléments en coin, sa section transversale soit inférieure, au jeu près, à la section transversale d'un élément (24), mais supérieure à la section transversale du trou traversant (29) de l'autre élément (23), désolidarisable du premier (24).

5. Liaison selon la revendication 4, avec une colonne, creuse au moins depuis l'une de ses extrémités jusqu'à l'emplacement de la fixation du tirant, et un noyau (7), inséré dans l'espace intérieur de la colonne (1), à l'emplacement de la fixation du tirant (3a, 3b, 3c, 3d).
l'organe (17a, 17c, 13, 53) étant engagé à travers le trou traversant (11a, 11c, 11b) de l'élément de garniture (5a, 5c, 5b) et l'enveloppe de la colonne, et fixé dans le noyau (7) ou
engagé à travers le noyau (7) et maintenu sur la face extérieure de la colonne (1) ou sur l'extrémité opposée à la colonne (1) d'un deuxième élément de garniture (5d), disposé dans un deuxième tirant (3d).

6. Liaison selon la revendication 4 ou 5, avec un organe présentant une vis et un écrou, dont la tige filetée traverse la colonne diamétralement, caractérisée en ce que la section transversale du tirant ainsi que l'écrou sont réalisés et dimensionnés de façon que cet écrou (14) puisse se déplacer longitudinalement dans le tirant (3d) sans y tourner.
